# EUROPÄISCHE PATENTSCHRIFT

(11) **EP 3 973 746 B1**
(45) Veröffentlichungstag und Bekanntmachung des Hinweises auf die Patenterteilung: **06.03.2024**
(21) Anmeldenummer: 20730179.7
(22) Anmeldetag: 20.05.2020
(51) Int. Cl.: H05B 45/34, H05B 45/46

(54) **VERFAHREN UND VORRICHTUNGEN ZUR REGELUNG DER AUSGANGSSPANNUNG EINES SPANNUNGSREGLERS**
METHOD AND APPARATUSES FOR CONTROLLING THE OUTPUT VOLTAGE OF A VOLTAGE REGULATOR
PROCÉDÉ ET DISPOSITIFS POUR RÉGULER LA TENSION DE SORTIE D'UN RÉGULATEUR DE TENSION

(30) Priorität: 23.05.2019 DE 102019113864
(43) Veröffentlichungstag der Anmeldung: 30.03.2022
(73) Patentinhaber: Elmos Semiconductor SE, 44227 Dortmund (DE)
(72) Erfinder: LEITNER, Carsten, 13507 Berlin (DE); KRIEGER, André, 12459 Berlin (DE); SCHMITZ, Christian, 44575 Castrop-Rauxel (DE); GEISTERT, Thomas, 59581 Warstein (DE)
(86) Internationale Anmeldenummer: PCT/DE2020/100438
(87) Internationale Veröffentlichungsnummer: WO 2020/233752

(56) Entgegenhaltungen:
- EP-A1- 2 293 165
- DE-B4-102005 028 403
- KR-A- 20110 123 864

## Beschreibung

### Allgemeine Einleitung

Die Erfindung richtet sich auf ein Verfahren und zugehörige Vorrichtungen zur Regelung der Ausgangsspannung (V₀) am Ausgang (Vₒᵤₜ) eines Spannungsreglers (VREG) zur Versorgung einer Beleuchtungsvorrichtung mit mehreren, mindestens aber zwei Schaltkreisen (IC1, IC2) mit mindestens einer LED-Gruppe (LED₁, LED₂, LED₃) mit zugehöriger LED-Stromquelle (LED DRV) je Schaltkreis (IC1, IC2) mit elektrischer Energie.

Unter LED wird hier eine lichtemittierende Diode verstanden. Eine LED-Gruppe kann eine Zusammenschaltung mehrerer LEDs durch Parallel- und/oder Serienschaltung sein, die einen ersten Anschluss und einen zweiten Anschluss aufweist und Lichtemittiert, wenn zwischen dem ersten und dem zweiten Anschluss in der richtigen Polarität Spannung angelegt wird.

LED-Beleuchtungen werden in vermehrtem Umfang in der Automobil-Industrie eingesetzt. Hierbei stellt sich das Problem, dass die Leucht-Dioden nicht alle die gleiche Schwellspannung aufweisen, die LEDs aber alle aus einer Spannungsquelle mit elektrischer Energie versorgt werden. Die Leuchtstärke der LEDs wird typischerweise über jeweilige Stromquellen eingestellt. Über diese Stromquellen fällt elektrische Leistung ab, die miniert werden muss. Die Spannungsquelle ist bevorzugt ein energetisch günstiger Schaltwandler, bei dem dementsprechend nur wenig Abwärme anfällt. Es stellt sich nun das Problem, wie mehrere integrierte Schaltungen, die jede für sich typischerweise mehrere LED-Stromquellen aufweisen, eine Spannungsquelle effizient und einfach regeln können.

### Stand der Technik

Aus dem Stand der Technik sind beispielsweise folgende Schriften aus dem technischen Umfeld der Erfindung bekannt:
Aus der DE 10 2006 055 312 A1 ist eine Antriebsvorrichtung für ein farbiges Hintergrundlicht bekannt. Dabei wird jeder LED-Strang aufwendig mit je einer Spannungsquelle und je einer Stromquelle versehen, um das Problem der kombinierten Regelung zu umgehen.

Aus der DE 10 318 780 A1 ist eine Ansteuerschaltung zum Erzeugen von zwei oder mehr geregelten oder gesteuerten Konstantströmen durch je einen Verbraucher z. B. eine LED, mit einer gemeinsamen in der Größe einstellbaren Versorgungsspannung bekannt, die die einzelnen Konstantstromquellen speist. Die technische Lehre der DE 10 318 780 A1 ist dadurch gekennzeichnet, dass sich die Versorgungsspannung in ihrer Größe jeweils auf die Konstantstromquelle einstellt, die generell oder zum jeweiligen Zeitpunkt die größte Gesamtimpedanz speist und damit die größte Versorgungsspannung erfordert. Dabei wird der Betrag der Versorgungsspannung so minimal eingestellt, dass der Betrag der auftretenden Spannung über einer der Stromquellen gerade zu deren Betrieb ausreicht. Die Regelung mehrerer LED-Zweige wird dabei durch eine Diodenauswahlsteuerung gelöst, die eine minimale Spannung einer Stromquelle selektiert.

Aus der US 8 319 449 B2 ist eine elektronische Vorrichtung zum Ansteuern einer lichtemittierenden Halbleitervorrichtung bekannt. Die Vorrichtung der US 8 319 449 B2 umfasst einen Rückkopplungsanschluss, der zum Empfangen eines Erfassungswerts konfiguriert und angeordnet ist, einen Ausgangsport, der konfiguriert und angeordnet ist, um die lichtemittierende Vorrichtung als Reaktion auf eine Stromquelle zuzuführen und eine von der lichtemittierenden Halbleitervorrichtung elektrisch entkoppelte oder isolierte Steuerschaltung, die so konfiguriert und angeordnet ist, dass sie als Reaktion auf den von der Steuerung empfangenen Erfassungswert über den Ausgangsport eine Schaltnetzteilversorgung steuert, um die lichtemittierende Halbleitervorrichtung zu versorgen, über den Rückkopplungsanschluss, der eine Spannung über der Stromquelle anzeigt, um einen Strom durch die lichtemittierende Halbleitervorrichtung zu bestimmen, wobei die Schaltnetzteilversorgung so gesteuert wird, dass die Spannung über der Stromquelle auf einem für den Gerätebetrieb notwendigen, minimalen Pegel gehalten wird. Eine Schaltung selektiert die minimale Stromquellenspannung als Regelspannung für die Spannungsquelle.

Aus der US 2010 / 0 026 209 A1 ist eine LED-Treiberschaltung zum Ansteuern einer LED-Lichtquelle bekannt. Die LED-Treiberschaltung der US 2010 / 0 026 209 A1 umfasst einen Regler, der mit der LED-Lichtquelle gekoppelt ist, um daran eine Ausgangsspannung zu liefern, eine Stromquelle, die mit der LED-Lichtquelle gekoppelt ist, um deren Ansteuerstrom zu steuern; und eine Steuerung, die mit der Stromquelle und dem Regler gekoppelt ist, um eine Spannung der Stromquelle zu erfassen, um ein Steuersignal für den Regler zu erzeugen, um die Ausgangsspannung zu regeln. Die technische Lehre der US 2010 / 0 026 209 A1 löst nicht das Problem, wie mehrere Controller aufwandsarm miteinander zu koppeln sind.

Aus der US 7 157 866 B2 ist eine Antriebsvorrichtung für ein Lichtemissionselement bekannt. Dieses umfasst entsprechend der technischen Lehre der US 7 157 866 B2, eine Erhöhungsschaltung zum Erhöhen einer gegebenen Stromversorgungsspannung, um eine erforderliche Erhöhungsspannung an einem Ausgangsende der Erhöhungsschaltung zu erzeugen, eine Spannungsumschaltschaltung zum selektiven Ausgeben der Stromversorgungsspannung oder Aufwärtsspannung an einem Umschaltspannungsausgangsende der Spannungsumschaltschaltung, einen ersten Treiber, der mit einer ersten Lichtemissionselementgruppe in Reihe geschaltet ist und zwischen dem geschalteten Spannungsausgangsende und einem Referenzspannungsknoten angeschlossen ist, wobei der erste Treiber durch ein erstes Befehlssignal gesteuert wird und einen zweiten Treiber, der mit einer zweiten Lichtemissionselementgruppe in Reihe geschaltet ist, die zu einem größeren Spannungsabfall als die erste Gruppe führt, und zwischen dem Ausgangsende der Aufwärtsspannungsausgabe und dem Referenzspannungsknoten angeschlossen ist, wobei der zweite Treiber durch ein zweites Befehlssignal gesteuert wird. Auch die technische Lehre der US 7 157 866 B2 löst nicht das Problem, wie mehrere Controller aufwandsarm miteinander zu koppeln sind.

Aus der EP 1499 165 B1 ist eine Lasttreibereinrichtung bzw. -vorrichtung zum Treiben vielfacher Lasten bekannt, wobei jede in Reihe mit einer zugehörigen Konstantstromquelle verbunden ist, wobei die Lasttreibervorrichtung eine Stromversorgungsschaltung (100) aufweist, welche eine Ausgangsspannung für die vielfachen Lasten liefert, welche durch Umwandeln einer Eingangsspannung in die Ausgangsspannung erhalten wird. Die technische Lehre der EP 1 499 165 B1 ist dadurch gekennzeichnet, dass die Konstantstromquellen (110, 20) vom einstellbaren Typ sind, und jede der Konstantstromquellen (I10, 20) in der Lage ist, einen einstellbaren konstanten Ausgangsstrom für die entsprechende Last (10, 20) zu liefern; und dass die Ausgangsspannung (Vo1) so gesteuert wird, dass sie eine niedrigste Spannung der Spannungen (Vdet1, Vdet2) an den gemeinsamen Knoten zwischen jeder der vielfachen Lasten (10, 20) und seiner jeweiligen Konstantstromquelle (110, 120) konstant hält. Die technische Lösung der EP 1 499 165 B1 ist ähnlich einer der zuvor beschriebenen Lösungen. Auch die technische Lehre der EP 1499 165 B1 löst nicht das Problem, wie mehrere Controller aufwandsarm miteinander zu koppeln sind. Durch die Spannungssignale ist die Lösung sehr anfällig gegen EMV-Signale und Potenzialversatz.

Aus der US 8 519 632 B2 ist eine Ansteuervorrichtung für mindestens eine Reihenschaltung mehrerer Leuchtdioden bekannt. Eine Ansteuervorrichtung entsprechend der technischen Lehre der
US 8 519 632 B2 umfasst eine Spannungsregeleinheit, die dazu eingerichtet ist, eine Betriebsspannung für die mindestens eine Serienschaltung der Leuchtdioden zu regeln, und eine Stromregelungseinheit für jede der mindestens einen Reihenschaltung von Leuchtdioden, wobei die Stromregelungseinheit dazu eingerichtet ist, den Strom durch die bestimmte Reihenschaltung von Leuchtdioden zu regeln, und wobei die Stromregelungseinheit mit der Spannungsregeleinheit verbunden ist um ein Stromregelungssignal an die Spannungsregeleinheit zu übertragen. Die Spannungsregeleinheit enthält einen Spannungsteiler, wobei der Spannungsteiler zwischen eine Betriebsspannung der mindestens einen Reihenschaltung von Leuchtdioden, die von der Spannungsregeleinheit bereitgestellt wird, und Masse geschaltet ist. Ein Abgriff des Spannungsteilers und ein Eingang einer ersten Regelungsstufe sind mit einem Ausgang einer zweiten Regelungsstufe verbunden, so dass, wenn das Stromregelungssignal eine vorbestimmte Spannung überschreitet, eine Spannung am Abgriff des Spannungsteilers verringert wird. Auch die technische Lehre der US 8 519 632 B2 verwendet Spannungssignale, die durch Dioden (Bezugszeichen 51, 52, 53 der US 8 519 632 B2) selektiert werden. Durch die Spannungssignale ist die Lösung sehr anfällig gegen EMV-Signale und Potenzialversatz.

Aus der DE 10 2005 028 403 B4 ist eine Stromquellenanordnung bekannt, bei der über einen Regelbus mittels eines Spannungssignals dem Spannungsregler das unterschreiten eines Mindestspannnugsabfalls in einem der Stromquellen zur Versorgung eines LED-Strangs mitgeteilt wird. Durch die Spannungssignale ist die Lösung sehr anfällig gegen EMV-Signale und Potenzialversatz.

Aus der WO 2013 / 030 047 A1 ist eine Lösung bekannt, bei der je Stromquelle ein Spannungssignal entsprechend dem Spannungsabfall über dieser Stromquelle an eine Zentraleinheit analog übertragen wird und dort in ein Spannungssteuersignal zur Steuerung einer gemeinsamen Spannungsversorgung übertragen wird. Durch die Spannungssignale ist die Lösung sehr anfällig gegen EMV-Signale und Potenzialversatz.

Aus der US 2008 / 0 122 383 A1 ist ein in LED-Treiber zum Einspeisen von elektrischem Strom in eine LED-Schaltung bekannt, die entweder aus einer einzelnen LED oder einer Vielzahl von LEDs besteht, die seriell miteinander verbunden sind, wobei der LED-Treiber einen Konstantstromschaltungsteil, der seriell mit der LED-Schaltung verbunden ist und einen Strom auf einen vorbestimmten Wert einstellt, der von einer stromaufwärtigen zu einer stromabwärtigen Seite davon fließt, einen Spannungseinstellungsteil, der seriell mit dem Konstantstromschaltungsteil verbunden ist, wobei der Spannungseinstellungsteil eine Potentialdifferenz zwischen der stromaufwärtigen und der stromabwärtigen Seite mit einem Schaltregler einstellt, umfasst. Auch die technische Lehre der US 2008 / 0 122 383 A1 löst nicht das Problem, wie mehrere Controller aufwandsarm miteinander zu koppeln sind.

Auch aus der US 2011 / 0 043 114 A1, der US 2007 / 0 139 317 A1, der US 2009 / 0 230 874 A1, der US 2012/0 268 012 A1, der EP 2 600 695 B1 und der US 2011 / 0 012 521 A1 sind Lösungen bekannt, bei der je Stromquelle ein Spannungssignal entsprechend dem Spannungsabfall über dieser Stromquelle an eine Zentraleinheit analog übertragen wird und dort in ein Spannungssteuersignal zur Steuerung einer gemeinsamen Spannungsversorgung übertragen wird.. Durch die Spannungssignale ist die Lösung sehr anfällig gegen EMV-Signale und Potenzialversatz.

Aus der US 2010 / 0 201 278 A1 ist eine Lösung bekannt, bei der die Controller in eine Schleife geschaltet werden. Jeder Controller bestimmt die Spannungswerte der Spannungsabfälle über seine LED-Stromquellen und vergleicht den minimalen Wert dieser Spannungswerte mit einem Spannungswert an einem Spannungswerteingang. Ist der eigene minimale Spannungswert kleiner als dieser Spannungswert am Spannungswerteingang, so gibt der jeweilige Controller seinen minimalen Spannungswert an den Spannungswerteingang des nachfolgenden Controllers. Ist der eigene minimale Spannungswert größer als dieser Spannungswert am Spannungswerteingang, so gibt der jeweilige Controller diesen Spannungswert am Spannungswerteingang an den Spannungswerteingang des nachfolgenden Controllers. Durch die Spannungssignale ist die Lösung sehr anfällig gegen EMV-Signale und Potenzialversatz.

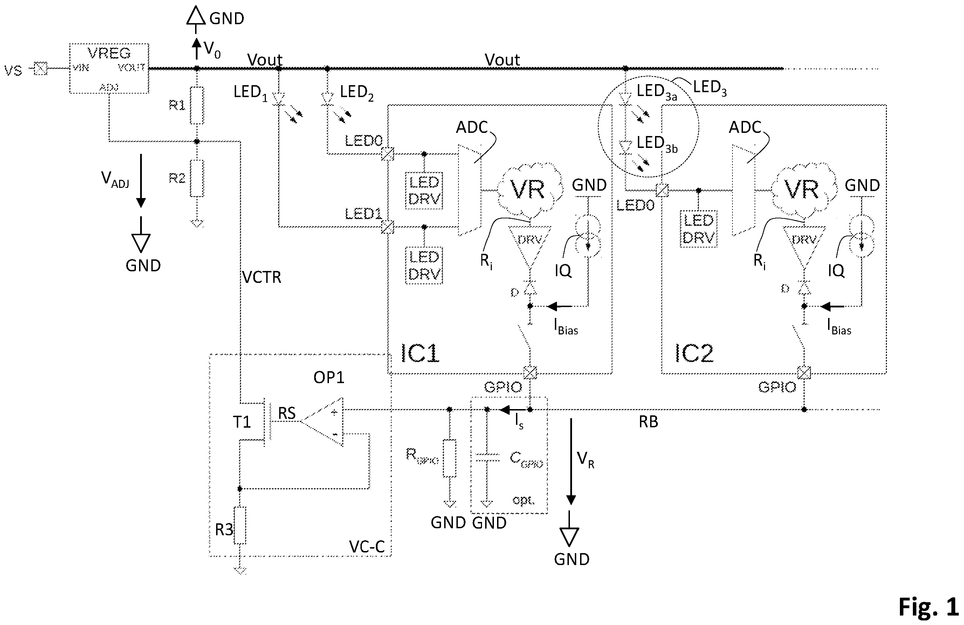

Die US 2011/0 012 521 A1 erfordert die Übertragung der Referenzwerte über eine Mehrzahl an Leitungen (Bezugszeichen Vf1~Vfi, Vfi+1~Vf2i, Vf2i+1~Vf3i in Figur 1 der US 2011 / 0 012 521 A1). Dies hat einen erheblichen Verdrahtungsaufwand und einen erheblichen Regelauswand zur Folge. Die Auswertung erfolgt in der technischen Lehre der US 2011 / 0 012 521 A1 durch einen Mikrorechner, was die Notwendigkeit eines Analog-zu-Digitalwandlers und einer PWM-Einheit zur Digital-zu-Analog-Wandlung zur Folge hat.

Die US 2010 / 0 201 278 A1 offenbart ein Verfahren und eine Vorrichtung zur Regelung einer Ausgangsspannung. In der technischen Lehre der US 2010 / 0 201 278 A1 ermittelt jeder LED-Treiber für sich, einen minimalen Spannungswert betreffend die Spannungsabfälle über seine LED-Stromquellen, vergleicht diesen Spannungsabfallswert mit seinem Vorgänger in einer Kette und gibt den minimalen Spannungswert dieser beiden Spannungswerte an seinen Nachfolger weiter. Im Falle eines Ausfalls eines Treibers kommt es somit zum Totalausfall der Regelung.

Auch aus der KR 2011 0123864 A ist eine Stromquellenanordnung bekannt, bei der über einen Regelbus mittels eines Spannungssignals dem Spannungsregler das unterschreiten eines Mindestspannnungsabfalls in einem der Stromquellen zur Versorgung eines LED-Strangs mitgeteilt wird. Durch die Spannungssignale ist die Lösung sehr anfällig gegen EMV-Signale und Potenzialversatz.

Ebenso ist aus der EP 2 293 165 A1 eine andere Stromquellenanordnung bekannt, bei der über einen Regelbus mittels eines Spannungssignals dem Spannungsregler das unterschreiten eines Mindestspannnugsabfalls in einem der Stromquellen zur Versorgung eines LED-Strangs mitgeteilt wird. Durch die Spannungssignale ist die Lösung ebenfalls sehr anfällig gegen EMV-Signale und Potenzialversatz.

### Aufgabe

Dem Vorschlag liegt daher die Aufgabe zugrunde, eine Lösung zu schaffen, die die obigen Nachteile des Stands der Technik nicht aufweist und weitere Vorteile aufweist.

Diese Aufgabe wird durch eine Vorrichtung nach Anspruch 2 oder ein Verfahren nach Anspruch 1 gelöst.

### Lösung der Aufgabe

Die Erfindung betrifft eine Spannungsregelung für eine Beleuchtungs- und/oder Lichtzeichengebervorrichtung entsprechend Figur 1.

Die Spannungsregelung erfolgt bevorzugt so, wie in der Figur 1 dargestellt. Die Erfindung wird anhand der Figur 1 erläutert. Kern der Erfindung ist ein stromgesteuerter Spannungsregler, der einen eigentlichen spannungsgesteuerten Spannungsreglerteil (VREG), wie er mannigfach aus der Patentliteratur bekannt ist, und eine umgebende Beschaltung (R1, R2, VC-C, R_{GPIO}) umfasst.

Die vorgeschlagene Vorrichtung dabei umfasst mehrere, mindestens aber zwei integrierte Schaltungen (IC1, IC2). Im Folgenden werden diese integrierten Schaltungen (IC1, IC2) auch nur als "ICs" bezeichnet.

Die einzelnen ICs (IC1, IC2) speisen über einen jeweiligen Regelbusanschluss (GPIO) ihrer Anschlüsse mittels einer dem jeweiligen IC (IC1, IC2) zugehörigen Stromquelle (IQ) einen nur im Wesentlichen gleichen Bias-Strom (I_{Bias}) in einen Regelbus (RB) ein. Im Wesentlichen bedeutet, dass dieser Bias-Strom (I_{Bias}) beispielsweise werksseitig so eingestellt wird, dass er von IC zu IC um nicht mehr als 25%, besser nicht mehr als 10% besser nicht mehr als 5%, besser nicht mehr als 2% von IC zu IC innerhalb der Gruppe der ICs abweicht. Eine Abweichung von 10% ist dabei erfahrungsgemäß für viele Anwendungsfälle möglich, ohne die Betriebsfähigkeit zu zerstören. Es wir hier jedoch dazu geraten, diese Ströme so präzise wie möglich auszuführen. Der Summenstrom (Is) aus der Stromsumme der eingespeisten Bias-Ströme (I_{Bias}) aller mit dem Regelbus (RB) verbunden integrierten Schaltungen (IC) fällt über einen Widerstand (R_{GPIO}) gegen Masse ab. Die dabei aus der Stromsumme der eingespeisten Bias-Ströme (I_{Bias}) aller mit dem Regelbus (RB) verbunden integrierten Schaltungen (IC) erzeugte Regelspannung (V_{R}) wird über den Verstärker (OP1) zu einem Regelsignal (RS) verstärkt. Der Ausgang des Verstärkers (OP1) in Form des Regelsignals (RS) ist mit dem Steuereingang eines ersten Transistors (T1) verbunden. Dieser erste Transistor (T1) ist als Source-Folger verschaltet. Der Gegenkopplungswiderstand dieses Source-Folgers ist ein dritter Widerstand (R₃). Damit bestimmt die Regelspannung (V_{R}) den Strom durch den Gegenkopplungswiderstand (R₃). Dieser Strom ist der Wert des Spannungsregelsignals (VCTR). Dieser Strom des Spannungsregelsignals (VCTR) durchfließt auch einen ersten Widerstand (R₁) eines Spannungsteilers aus einem ersten Widerstand (R₁) und einem zweiten Widerstand (R₂), da der Eingang des Spannungsreglers (VREG) im Vergleich zu diesen Widerständen (R₁, R₂₎) bevorzugt hochohmig ist. Der Eingangswiderstand des Spannungsreglers (VREG) kann daher hier typischerweise vernachlässigt werden. Der zweite Widerstand (R₂) leitet dabei einen weiteren Strom gegen Masse (d.h. das Bezugspotenzial (GND)) ab. Der Summenstrom aus der Stromsumme des Stroms durch den Gegenkopplungswiderstand, den dritten Widerstand (R₃), und des Stroms durch den zweiten Widerstand (R₂) durchfließt auch den ersten Widerstand (R₁). Damit hängt die Potenzialdifferenz am Eingang (ADJ) des Spannungsreglers (VREG) gegenüber dem Bezugspotenzial (GND) von dem Ausgangspotenzial des Spannungsreglerausgangs (Vₒᵤₜ) des Spannungsreglers (VREG) minus der Spannung ab, die über den ersten Widerstand (R1) abfällt. Der Spannungsregler (VREG) liefert eine Ausgangsspannung (Vₒᵤₜ) gegenüber Massepotenzial, die von dieser Eingangsspannungsdifferenz (Potenzial am Eingang (ADJ) des Spannungsreglers (VREG) gegenüber dem Bezugspotenzial (GND)) abhängt. Die Natur des Spannungsreglers (VREG) kann hier offengelassen werden. Es kann sich beispielsweise um einen Linearregler und/oder einen Schaltregler handeln. Diese Ausgangsspannung (Vₒᵤₜ) versorgt die LEDs (LED₁, LED₂, LED₃ₐ, LED_{3b}) der LED Gruppen (LED₁, LED₂, LED₃) mit elektrischer Energie. Anders als im Beispiel der Figur kann die Kette integrierter Schaltungen (IC1, IC2) zur Versorgung mehrerer LED-Gruppen mehr als eine und/oder mehr als zwei und/oder mehr als drei und oder noch mehr integrierte Schaltungen (IC1, IC2) und/oder mehr als eine LED-Gruppe pro integrierter Schaltung (IC1, IC2) dieser intergrierten Schaltungen umfassen. Eine LED-Gruppe (LED₁, LED₂, LED₃) in diesem Sinne kann dabei aus einer einzelnen LED aber auch einer Zusammenschaltung, insbesondere aus einer Parallel- und/oder Serienschaltung mehrerer LEDs, bestehen. Im Folgenden wird von dem Begriff LED daher auch solche Zusammenschaltungen mehrerer LEDs zu einer LED-Gruppe mit umfasst, auch wenn der Begriff im Singular verwendet wird. Im Falle der Zusammenschaltungen mehrerer LEDs, werden gleichartige Zusammenschaltungen für die Ansteuerung durch die verschiedenen integrierten Schaltungen (IC1, IC2) eindeutig bevorzugt. Der Strom durch jede der LED-Gruppen bzw. LEDs (LED₁, LED₂, LED₃ₐ, LED_{3b}) wird jeweils durch eine jeweils dieser LED-Gruppe (LED₁, LED₂, LED₃) zugeordnete jeweilige Stromquelle in Form eines jeweiligen LED-Treibers (LED DRV) eines Schaltkreises (IC1, IC2) geregelt. Diese Stromquelle, der LED-Treiber (LED DRV), ist bevorzugt Teil der jeweiligen integrierten Schaltung (IC1, IC2). Eine integrierte Schaltung (IC1, IC2) kann mehrere solcher Stromquellen, LED-Treiber (LED DRV) umfassen und somit mehrere LED-Gruppen mit elektrischer Energie versorgen. Der Spannungsabfall über jede LED-Gruppe (LED₁, LED₂, LED₃), die durch einen LED-Treiber (LED DRV) eines integrierten Schaltkreises (IC1, IC2) mit elektrischer Energie versorgt wird, wird durch einen Analog-zu-Digital-Wandler (ADC) des betreffenden integrierten Schaltkreises (IC1, IC2) als Potenzial des entsprechenden LED-Anschlusses (LED0, LED1) der jeweiligen integrierten Schaltung (IC1, IC2) gegenüber dem Bezugspotenzial (GND) erfasst. Der Analog-zu-Digital-Wandler (ADC) des betreffenden integrierten Schaltkreises (IC1, IC2) verfügt hierzu jeweils bevorzugt über einen Multiplexer, um zwischen den verschiedenen LED-Gruppen (LED₁, LED₂, LED₃), die durch die LED-Treiber (LED DRV) des integrierten Schaltkreises (IC1, IC2) mit elektrischer Energie versorgt werden, im Zeitmultiplex umschalten zu können. Eine solche integrierte Schaltung (IC1, IC2) kann somit dazu vorgesehen und ausgelegt sein, n LED-Gruppen (LED₁ bis LEDₙ) mit elektrischer Energie über typischerweise n LED-Anschlüsse (LED0 bis LED(n-1)) mittels n LED-Treibern (LED DRV) dieser integrierten Schaltung (IC1, IC2) zu versorgen, wobei n eine ganze positive Zahl ist. Es ist dabei allerdings denkbar, einen Anschlussknoten über eine größere Anzahl an Anschlüssen nach außen zu führen. Im Sinne dieser Schrift gelten dermaßen untereinander kurzgeschlossene Anschlüsse einer integrierten Schaltung als ein einziger Anschluss, da die elektrische Funktion hier maßgeblich sein soll und nicht die mechanische Realisierung. In dem Beispiel der Figur 1 ist n=3. Daher sind im Folgenden die Indices "n" in Bezug auf die Figur 1 wie mit einem Index "3" zu verstehen. Jede LED-Gruppe der n LED-Gruppen (LED₁ bis LEDₙ) kann, wie bereits beschrieben, aus einer einzelnen LED (LED₁, LED₂), aber auch aus Zusammenschaltungen (LED₃) mehrerer LEDs (LED3ₐ, LED3_{b}) bestehen. Die n Messwerte des Analog-zu-Digital-Wandlers (ADC) für die n LED-Gruppen (LED₁ bis LEDₙ) sind die Eingangswerte für die einen jeweiligen lokalen Regler (VR) der jeweiligen integrierten Schaltung (IC1, IC2). Der lokale Regler (VR) bekommt somit n Spannungswerte für die n Potenziale der n LED-Anschlüsse (LED1, LED0) der integrierten Schaltung (IC1, IC2) gegenüber einem Bezugspotenzial (GND). Dieser lokale Regler (VR) erzeugt nach einem Algorithmus, beispielsweise durch Auswahl des minimalen Spannungswerts aus den n Potenzialdifferenzen zwischen den besagten n Messwerten des Analog-zu-Digital-Wandlers (ADC) für die Potenziale an den n LED-Anschlüssen der n LED-Gruppen (LED₁ bis LEDₙ) des integrierten Schaltkreises (IC1, IC2) gegenüber dem Bezugspotenzial (GND) als lokalen Regelwert, aus den Regelabweichungen dieser Spannungsabfälle der jeweiligen Stromquellen (LED DRV) jeweiligen LED-Gruppen, also aus den n Potenzialdifferenzen zwischen den besagten n Messwerten des Analog-zu-Digital-Wandlers (ADC) für die Potenziale an den n LED-Anschlüssen der n LED-Gruppen (LED₁ bis LEDₙ) des integrierten Schaltkreises (IC1, IC2) gegenüber dem Bezugspotenzial (GND), ein internes Regelsignal (Rᵢ).

Teil des lokalen Reglers (VR) eines integrierten Schaltkreises (IC1, IC2) ist jeweils ein Digital-zu-Analog-Wandler dieses integrierten Schaltkreises, der mindestens einen Treiber (DRV) steuert, der auch Teil des Digital-zu-Analog-Wandlers des integrierten Schaltkreises (IC1, IC2) sein kann. Der lokale Regler (VR) des integrierten Schaltkreises (IC1, IC2) ist nun so gestaltet, dass der oder die jeweiligen Treiber (DRV) eines integrierten Schaltkreises (IC1, IC2) nun aus dem Regelbus (RB) jeweils einen zusätzlichen, jeweiligen Strom entnehmen, wenn der für den betreffenden integrierten Schaltkreis (IC1, IC2) festgestellte minimale Spannungsabfall aller Spannungsabfälle über die jeweiligen Stromquellen (LED DRV) dieses integrierten Schaltkreises (IC1, IC2) zwischen dem betreffenden LED-Anschluss (LED0, LED1) und dem Bezugspotenzial zu gering ist, sein Betragswert also unterhalb eines vorgegebenen Schwellwert liegt. Eine Diode (D) verhindert die Einspeisung eines Stromes durch die Treiber (DRV) in den Regelbus (RB) und erlaubt nur eine Stromentnahme aus dem Regelbus (RB).

Die verschiedenen Stromquellen (IQ) und Treiber (DRV) der verschiedenen Buskomponenten (integrierten Schaltkreise (IC1, IC2)) arbeiten auf dem gemeinsamen Regelbus (RB).

Der Regelbus (RB) hat dabei bevorzugt immer die niedrigste Spannung gegen das Bezugspotenzial (GND).

Bei einer Verschiebung des Potenzials bestimmt immer die niedrigste Ausgangsspannung desjenigen Treibers (DRV) mit dem niedrigsten Ausgangspotenzial die Spannung auf dem Regelbus (RB) gegen das Bezugspotenzial.

Für eine zeitkontinuierliche Regelung ist es notwendig, dass die Abtastperiode der LED-Anschlüsse (LED0, LED1) der integrierten Schaltkreise (IC1, IC2) durch die Analog-zu-Digital-Wandler (ADC) wesentlich kleiner als die Regelzeitkonstante für den nach folgenden Regelkreis gewählt wird, um den dadurch erzeugten Regelfehler klein zu halten. Zu diesem Zweck kann der Widerstand (R_{GPIO}) zur Wandlung des Summenstroms (Iₛ) in eine Spannung durch ein komplexeres Netzwerk komplexer Bauelemente wie Widerstände, Kondensatoren und Spulen ersetzt werden. In dem Beispiel der Figur 1 ist eine beispielhafte Integrationskapazität (C_{GPIO}) optional vorgesehen, um die Zeitkonstante zu erhöhen und so Quantisierungsfehler zu vermindern.

### Merkmale der Erfindung

Kern der Erfindung ist somit ein Verfahren zur Regelung einer Ausgangsspannung (V₀) an einem Ausgang (Vₒᵤₜ) eines stromgesteuerten Spannungsreglers (VREG) zur Versorgung einer Beleuchtungsvorrichtung mit mehreren, mindestens aber zwei Schaltkreisen (IC1, IC2), wobei jeder dieser mindestens zwei Schaltkreise mindestens eine LED-Gruppe (LED₁, LED₂, LED₃) jeweils mittels einer ihm zugehörigen und der jeweiligen LED-Gruppe zugeordneten Stromquelle in Form eines LED-Treibers (LED DRV) mit elektrischer Energie versorgt. Das Verfahren, das in der beispielhaften Vorrichtung der Figur 1 dargestellt ist, umfasst u.a. zumindest folgende Schritte:
Als Erstes wird eine Versorgungsspannung (V₀) mittels des stromgesteuerten Spannungsreglers (VREG) an dessen Ausgang (Vₒᵤₜ) erzeugt.

Als Zweites erfolgt das Einstellen eines jeweiligen LED-Gruppen-Stromes (I_{LED1}, I_{LED2}, I_{LED3}) durch die mindestens eine LED-Gruppe (LED₁, LED₂, LED₃) mittels einer Stromquelle (LED DRV) je LED-Gruppe (LED₁, LED₂, LED₃). Insbesondere erfolgt ein Einstellen eines LED-Gruppen-Stroms jeweils durch die mindestens eine LED-Gruppe mittels der dieser LED-Gruppe zugeordneten Stromquelle eines ersten Schaltkreises. Insbesondere erfolgt ein Einstellen eines LED-Gruppen-Stroms jeweils durch die mindestens eine LED-Gruppe mittels der dieser LED-Gruppe zugeordneten Stromquelle eines zweiten Schaltkreises. Insbesondere erfolgt ein Einstellen eines LED-Gruppen-Stroms jeweils durch die mindestens eine LED-

Gruppe mittels der dieser LED-Gruppe zugeordneten Stromquelle eines weiteren Schaltkreises, wenn die Beleuchtungsvorrichtung mehr als zwei Schaltkreise umfasst.

In dem Beispiel der Figur 1 verteilen sich die LED-Gruppen (LED₁, LED₂, LED₃) auf zwei Schaltkreise (IC1, IC2). Vorrichtungen mit mehr als zwei Schaltkreisen und mehr als drei LED-Gruppen sollen ausdrücklich mit von den Ansprüchen umfasst sein und als hier offenbart gelten.

Als Drittes erfolgt ein Erfassen eines jeweiligen Spannungsabfalls über die jeweiligen Stromquellen (LED DRV) der LED-Gruppen (LED₁, LED₂, LED₃) als jeweilige Spannungsabfallwerte. Insbesondere wird der jeweilige Spannungsabfall über die jeweiligen Stromquellen der LED-Gruppen mittels eines Messmittels in jedem Schaltkreis erfasst. Insbesondere wird in jedem Schaltkreis für jede Stromquelle je ein Spannungsabfallwert ermittelt.

Als Viertes erfolgt in bevorzugt jedem Schaltkreis (IC1, IC2) unter den für diesen Schaltkreis ermittelten Spannungsabfallwerten die Auswahl eines jeweiligen Spannungsabfallwerts aus den Spannungsabfallwerten der jeweiligen Stromquelle (LED DRV) dieses Schaltkreises als kennzeichnender Spannungsabfallwert dieses Schaltkreises. Somit ergibt sich bevorzugt je Schaltkreis ein kennzeichnender Spannungsabfallwert. Insbesondere erfolgt die Auswahl des jeweiligen Spannungsabfallwerts aus den Spannungsabfallwerten der Stromquellen des jeweiligen Schaltkreises als kennzeichnenden Spannungsabfallwert dieses Schaltkreises mittels eines lokalen Reglers in jedem Schaltkreis.

Es erfolgt als nichts anderes als das Ermitteln eines jeweiligen Spannungsabfallwerts einer Stromquelle (LED DRV) jedes Schaltkreises (IC1, IC2) aus den Spannungsabfallwerten der Stromquellen (LED DRV) dieses jeweiligen Schaltkreises (IC1, IC2) als kennzeichnender Spannungsabfallwert dieses Schaltkreises (IC1, IC2). Bevorzugt ist der kennzeichnende Spannungsabfallwert dieses Schaltkreises (IC1, IC2) der minimale Spannungsabfallwert der ermittelten Spannungsabfallwerte dieses Schaltkreises (IC1, IC2).

Als Fünftes entnimmt jeder der Schaltkreise (IC1, IC2) einen ihm zugeordneten elektrischen Strom, seinen Entnahmestrom, aus einem Regelbus (RB). Dies stellt ein Entnehmen eines jeweiligen Entnahmestromes des jeweiligen Schaltkreises (IC1, IC2) aus einem Regelbus (RB) durch jeden dieser Schaltkreise (IC1, IC2) dar. Insbesondere erfolgt die Entnahme des jeweiligen Entnahmestroms des jeweiligen Schaltkreises (IC1, IC2) aus einem Regelbus (RB) durch jeden dieser Schaltkreise mittels eines Treibers (DRV) in jedem Schaltkreis. Der Betrag dieses jeweiligen Entnahmestromes des jeweiligen

Schaltkreises (IC1, IC2) hängt dabei von der Abweichung des kennzeichnenden Spannungsabfallwerts des entsprechenden Schaltkreises von einem Sollwert linear ab. Dieser Sollwert ist bevorzugt allen Schaltkreisen gemeinsam und bei allen Schaltkreisen (IC1, IC2) somit im Rahmen eines Toleranzfensters gleich gewählt oder eingestellt.

Insbesondere werden alle Entnahmeströme und mindestens ein konstanter Bias-Strom zu einem Summenstrom summiert. Insbesondere werden alle Entnahmeströme und mindestens ein konstanter Bias-Strom durch Einspeisung in den Regelbus (RB) zu einem Summenstrom summiert.

Bevorzugt wird von bevorzugt jedem Schaltkreis (IC1, IC2) jeweils ein im Wesentlichen konstanter Bias-Strom (I_{Bias}) in den Regelbus (RB) eingespeist. Eine einzige Einspeisung ist in der Regel aber für eine Funktionstüchtigkeit ausreichend. Theoretisch sind mit höherem Schaltungsaufwand auch Lösungen ohne Bias-Strom-Einspeisung denkbar, hier aber nicht bevorzugt.

Durch die Stromeinspeisung in den Regelbus (RB) werden alle Entnahmeströme und mindestens ein optionaler konstanter Bias-Strom (I_{Bias}) zu einem Summenstrom (Is) summiert. Diese aufwendungsarme und leicht und preiswert zu implementierende Erzeugung eines gemeinsamen Summenstroms und dessen spätere Verwendung als Regelsignal stellen den Kern der Erfindung dar. Es erfolgt dann eine Regelung der Ausgangsspannung (V₀) des Spannungsreglers (VREG) an seinem Ausgang (Vₒᵤₜ) in Abhängigkeit von dem Summenstrom (Iₛ). Insbesondere erfolgt die Regelung der Ausgangsspannung des Spannungsreglers an seinem Ausgang in Abhängigkeit von dem Summenstrom mittels einer Rückkopplung. In dem Beispiel der Figur 1 werden aus schaltungstechnischen Gründen mehrere Strom-Spannungs-Wandlungen und Spannungs-Stromwandlungen vorgenommen. Theoretisch ist aber eine direkte Steuerung des Spannungsreglers mit diesem Stromsignal denkbar, wenn der Spannungsregler über einen Stromeingang zur Regelung seines Referenzwerts verfügt. In dem Beispiel der Figur 1 wird jedoch ein Spannungseingang für den Spannungsregler (VREG) angenommen.

Die entsprechende Vorrichtung zur Versorgung mehrerer, mindestens aber zwei LED-Gruppen (LED₁, LED₂, LED₃) mit elektrischer Energie umfasst daher bevorzugt einen stromgesteuerten Spannungsregler (VREG), mindestens zwei Schaltkreise (IC1, IC2) und einen Regelbus. Insbesondere weist jeder der Schaltkreise zumindest einen LED-Anschluss für eine korrespondierende Anzahl an LED-Gruppen auf.

Insbesondere weist jeder der Schaltkreise zumindest jeweils einen LED-Treiber je LED-Gruppe auf. Insbesondere ist der LED-Treiber dazu eingerichtet die jeweilige LED-Gruppe über den dieser LED-Gruppe zugehörigen LED-Anschluss mit Energie zu versorgen.

Insbesondere weist jeder der Schaltkreise (IC1, IC2) jeweils zumindest ein Messmittel (ADC) auf.

Insbesondere ist das zumindest eine Messmittel (ADC) dazu eingerichtet je LED-Anschluss (LED0, LED1) des Schaltkreises (IC1, IC2) einen Spannungsabfallwert zwischen einem Potential des jeweiligen LED-Anschlusses (LED0, LED1) und einem Bezugspotential (GND) zu erfassen.

Insbesondere weist jeder der Schaltkreise (IC1, IC2) einen Treiber (DRV) und einen lokalen Regler (VR) auf. Insbesondere ist der lokale Regler (VR) dazu eingerichtet einen jeweiligen Spannungsabfallwert jedes Schaltkreises (IC1, IC2) aus den Spannungsabfallwerten dieses jeweiligen Schaltkreises (IC1, IC2) als kennzeichnenden Spannungsabfallwert dieses Schaltkreises (IC1, IC2) auszuwählen.

Insbesondere ist der lokale Regler (VR) weiter dazu eingerichtet mittels des Treibers in linearer Abhängigkeit von den durch das Messmittel des jeweiligen Schaltkreises erfassten Spannungsabfallwerten einen jeweiligen Entnahmestrom aus dem Regelbus zu entnehmer

Insbesondere hängt der Betrag des jeweiligen Entnahmestroms des jeweiligen Schaltkreises von der Abweichung des kennzeichnenden Spannungsabfallwerts des entsprechenden Schaltkreises von einem Sollwert linear ab.

Insbesondere weist jeder der Schaltkreise (IC1, IC2) jeweils eine Bias-Stromquelle (IQ) auf. Insbesondere ist die Bias-Stromquelle (IQ) dazu eingerichtet einen jeweiligen Bias-Strom (I_{Bias}) zur Bildung eines Summenstroms (I_{S}) in den Regelbus (RB) einzuspeisen.

Insbesondere entspricht der Summenstrom der Summe aller jeweiligen Entnahmeströme und aller jeweiligen Bias-Ströme der jeweiligen Schaltkreise.

Insbesondere ist die Ausgangsspannung des stromgesteuerten Spannungsreglers von dem Wert des Summenstroms abhängig.

Insbesondere ist die Vorrichtung per Rückkopplung derart eingerichtet, dass die Ausgangsspannung (V₀) des stromgesteuerten Spannungsreglers (VREG) von dem Wert des Summenstroms (Iₛ) abhängig ist.

In einer Ausgestaltung umfasst die Vorrichtung weiter einen Widerstand (R_{GPIO}). Insbesondere ist der Widerstand (R_{GPIO}) dazu eingerichtet eine Strom-Spannungswandlung des Summenstroms in eine Regelspannung durchzuführen.

Insbesondere ist die Ausgangsspannung des stromgesteuerten Spannungsreglers in dieser Ausgestaltung anstelle des Werts des Summenstroms von dem Wert der Regelspannung (V_{R}) abhängig. Somit ist die Ausgangsspannung (V₀) des stromgesteuerten Spannungsreglers (VREG) mittelbar über den Wert der Regelspannung (V_{R}) vom Wert des Summenstroms (Is) abhängig.

In einer weiteren Ausgestaltung umfasst die Vorrichtung weiter einen Spannung-zu-Strom-Wandler (VC-C) und ein Widerstandsnetzwerk.

Insbesondere ist der Spannung-zu-Strom-Wandler dazu eingerichtet die Regelspannung in einen Strom eines Spannungsregelsignals zu wandeln.

Insbesondere ist das Widerstandsnetzwerk dazu eingerichtet den Strom des Spannungsregelsignals in einen Spannungswert zu wandeln.

Insbesondere ist die Ausgangsspannung des stromgesteuerten Spannungsreglers in dieser Ausgestaltung anstelle des Werts der Regelspannung von dem Spannungswert (V_{ADJ}) abhängig. Somit ist die Ausgangsspannung (V₀) des stromgesteuerten Spannungsreglers (VREG) mittelbar über den Spannungswert (V_{ADJ}) vom Wert des Summenstroms (Is) abhängig.

In dem in Figur 1 dargestellten Ausführungsbeispiel umfasst die Vorrichtung zur Versorgung mehrerer, mindestens aber zwei LED-Gruppen (LED₁, LED₂, LED₃) mit elektrischer Energie einen stromgesteuerten Spannungsregler (VREG), mindestens zwei Schaltkreise (IC1, IC2), einen Spannung-zu-Strom-Wandler (VC-C), einen Regelbus (RB), einen Widerstand (R_{GPIO}) und einem Widerstandsnetzwerk (R1, R2). Jeder der Schaltkreise (IC1, IC2) weist bevorzugt zumindest einen LED-Anschluss (LED0, LED1) für zumindest eine LED-Gruppe (LED₁, LED₂, LED₃), zumindest jeweils einen LED-Treiber (LED DRV) je LED-Gruppe (LED₁, LED₂, LED₃) für die Energieversorgung dieser LED-Gruppe (LED₁, LED₂, LED₃) über einen dieser LED-Gruppe (LED₁, LED₂, LED₃) zugehörigen LED-Anschluss (LED0, LED1) und zumindest ein Messmittel (ADC) dieses Schaltkreises (IC1, IC2) zur Erfassung der Spannungsdifferenzen zwischen den Potenzialen von LED-Anschlüssen (LED0, LED1) dieses Schaltkrieses (IC1, IC2) und einem Bezugspotenzial (GND) auf. Des Weiteren weist jeder der Schaltkreise (IC1, IC2) einen lokalen Regler (VR) auf, der mittels zumindest eines Treibers (DRV) in Abhängigkeit von den durch sein Messmittel (ADC) erfassten Spannungsdifferenzen einen Strom aus dem Regelbus (RB) entnimmt. Eine oder mehrere Bias-Stromquellen (IQ) speisen einen oder mehrere Bias-Ströme (I_{Bias}) in Form eines Summenstroms der eingespeisten Bias-Ströme (I_{Bias}) in den Regelbus (RB) ein, um den Arbeitspunkt richtig einzustellen. Der Widerstand (R_{GPIO}) führt dabei eine Strom-Spannungswandlung des Summenstroms (Iₛ) in eine Regelspannung (V_{R}) durch. Der Spannung-zu-Strom-Wandler (VC-C) die Regelspannung (V_{R}) in einen Strom eines Spannungsregelsignals (VCTR) wandelt. Das Widerstandsnetzwerk (R1, R2) wandelt den Strom des Spannungsregelsignals (VCTR) in einen Spannungswert (V_{ADJ}). Die Ausgangsspannung (V₀) des Spannungsreglers (VREG) hängt von dem Spannungswert (V_{ADJ}) ab, sodass dieses dann den Regelkreis schließt. Bevorzugt sind die Abhängigkeiten linear.

Die Regelkette der Figur 1 kann massiv verkürzt werden.

Die entsprechende in einem ersten Schritt vereinfachte Vorrichtung zur Versorgung mehrerer, mindestens aber zwei LED-Gruppen (LED₁, LED₂, LED₃) mit elektrischer Energie umfasst daher bevorzugt einen Spannungsregler (VREG), mindestens zwei Schaltkreise (IC1, IC2), einen Regelbus (RB), einen Widerstand (R_{GPIO}). Jeder der Schaltkreise (IC1, IC2) weist bevorzugt zumindest einen LED-Anschluss (LED0, LED1) für zumindest eine LED-Gruppe (LED₁, LED₂, LED₃), zumindest jeweils einen LED-Treiber (LED DRV) je LED-Gruppe (LED₁, LED₂, LED₃) für die Energieversorgung dieser LED-Gruppe (LED₁, LED₂, LED₃) über einen dieser LED-Gruppe (LED₁, LED₂, LED₃) zugehörigen LED-Anschluss (LED0, LED1) und zumindest ein Messmittel (ADC) dieses Schaltkreises (IC1, IC2) zur Erfassung der Spannungsdifferenzen zwischen den Potenzialen von LED-Anschlüssen (LED0, LED1) dieses Schaltkrieses (IC1, IC2) und einem Bezugspotenzial (GND) auf. Des Weiteren weist jeder der Schaltkreise (IC1, IC2) einen lokalen Regler (VR) auf, der mittels zumindest eines Treibers (DRV) in Abhängigkeit von den durch sein Messmittel (ADC) erfassten Spannungsdifferenzen einen Strom aus dem Regelbus (RB) entnimmt. Eine oder mehrere Bias-Stromquellen (IQ) speisen einen oder mehrere Bias-Ströme (I_{Bias}) in Form eines Summenstroms der eingespeisten Bias-Ströme (I_{Bias}) in den Regelbus (RB) ein, um den Arbeitspunkt richtig einzustellen. Der Widerstand (R_{GPIO}) führt dabei eine Strom-Spannungswandlung des Summenstroms (Iₛ) in eine Regelspannung (V_{R}) durch. Die Ausgangsspannung (V₀) des Spannungsreglers (VREG) hängt von dem Spannungswert der Regelspannung (V_{R}) ab, sodass dieses dann den Regelkreis schließt. Bevorzugt sind die Abhängigkeiten linear.

Diese Regelkette kann weiter verkürzt werden.

Die entsprechende in einem zweiten Schritt vereinfachte Vorrichtung zur Versorgung mehrerer, mindestens aber zwei LED-Gruppen (LED₁, LED₂, LED₃) mit elektrischer Energie umfasst daher bevorzugt einen Spannungsregler (VREG), mindestens zwei Schaltkreise (IC1, IC2), einen Regelbus (RB). Jeder der Schaltkreise (IC1, IC2) weist bevorzugt zumindest einen LED-Anschluss (LED0, LED1) für zumindest eine LED-Gruppe (LED₁, LED₂, LED₃), zumindest jeweils einen LED-Treiber (LED DRV) je LED-Gruppe (LED₁, LED₂, LED₃) für die Energieversorgung dieser LED-Gruppe (LED₁, LED₂, LED₃) über einen dieser LED-Gruppe (LED₁, LED₂, LED₃) zugehörigen LED-Anschluss (LED0, LED1) und zumindest ein Messmittel (ADC) dieses Schaltkreises (IC1, IC2) zur Erfassung der Spannungsdifferenzen zwischen den Potenzialen von LED-Anschlüssen (LED0, LED1) dieses Schaltkrieses (IC1, IC2) und einem Bezugspotenzial (GND) auf. Des Weiteren weist jeder der Schaltkreise (IC1, IC2) einen lokalen Regler (VR) auf, der mittels zumindest eines Treibers (DRV) in Abhängigkeit von den durch sein Messmittel (ADC) erfassten Spannungsdifferenzen einen Strom aus dem Regelbus (RB) entnimmt. Eine oder mehrere Bias-Stromquellen (IQ) speisen einen oder mehrere Bias-Ströme (I_{Bias}) in Form eines Summenstroms (Iₛ) der eingespeisten Bias-Ströme (I_{Bias}) in den Regelbus (RB) ein, um den Arbeitspunkt richtig einzustellen. Die Ausgangsspannung (V₀) des Spannungsreglers (VREG) hängt von dem Stromwert des Summenstroms (Iₛ) ab, sodass dieses dann den Regelkreis schließt. Bevorzugt sind die Abhängigkeiten linear. Hier ist ein stromgesteuerter Spannungsregler erforderlich.

### Vorteil

Eine solche Vorrichtung erlaubt auf einfache Weise eine Regelung des Spannungsreglers zur Versorgung komplexerer LED-Anordnungen, die aus mehreren Schaltkreisen mit elektrischer Energie versorgt werden. Erfindungsgemäß wurde erkannt, dass dies mit einem stromgesteuerten Spannungsregler besonders einfach ist. Hierbei ist der Summenstrom (Is) das Ist-Wert-Signal und der Eingang des Spannung-zu-Strom-Wandlers (VC-C) der beispielhafte Eingang eines um die betreffenden Bauteile (VREG, R1, R2, VC-C) erweiterten stromgesteuerten Spannungsreglers. Durch das stromgeführte Signal ist die Konstruktion im Gegensatz zum Stand der Technik besonders robust gegen EMV-Einstrahlungen und Potentialversatz.

### Bezugszeichenliste

- ADC: Analog-zu-Digital-Wandler;
- ADJ: Eingang des Spannungsreglers (VREG) für das Spannungsregelsignal (VCTR);
- I_{Bias}: Bias-Strom der jeweiligen Bias-Stromquelle (IQ), der über den Regelbusanschluss des jeweiligen integrierten Schaltkreises (IC1, IC2) in den Regelbus (RB) eingespeist wird. Der Bias-Strom ist bevorzugt ein zeitlich konstanter Strom zur Arbeitspunkteinstellung der vorgeschlagenen Vorrichtung.
- IC1: erste integrierte Schaltung;
- IC2: zweite integrierte Schaltung;
- IQ: Bias-Stromquelle eines integrierten Schaltkreises (IC1, IC2);
- I_{S}: Summenstrom der eingespeisten Bias-Ströme (I_{Bias}) aller mit dem Regelbus (RB) verbunden integrierten Schaltungen (IC);
- GND: Bezugspotenzial;
- GPIO: Regelbusanschluss des jeweiligen integrierten Schaltkreises (IC1, IC2);
- OP1: Verstärker;
- LED₁: erste LED = erste LED-Gruppe;
- LED₂: zweite LED= zweite LED-Gruppe;
- LED₃: dritte LED-Gruppe;
- LED₃ₐ: erste LED der dritten LED-Gruppe (LED₃);
- LED_{3b}: zweite LED der dritten LED-Gruppe (LEDs);
- LED0: erster LED-Anschluss;
- LED1: zweiter LED-Anschluss;
- LED DRV: LED-Treiber;
- R₁: erster Widerstand;
- R₂: zweiter Widerstand;
- R₃: dritter Widerstand;
- RB: Regelbus;
- Rᵢ: internes Regelsignal;
- RS: Regelsignal;
- R_{GPIO}: Widerstand zur Wandlung des Summenstroms (Iₛ) in eine Spannung;
- T1: erster Transistor;
- V₀: Ausgangsspannung des Spannungsreglers (VREG) an seinem Spannungsreglerausgang (Vout) gegen das Bezugspotenzial (GND)
- V_{ADJ}: Spannungswert des Spannungsregelsignals (VCTR) gegen ein Bezugspotenzial (GND);
- VC-C: Spannung-zu-Strom-Wandler (englisch external voltage to current converter), der bevorzugt nicht Teil der integrierten Schaltkreise (IC1, IC2) und/oder des Spannungsreglers (VREG) ist und der beispielsweise aus einem ersten Transistor (T1), einem Verstärker (OP1) und einem dritten Widerstand (R3) bestehen kann.
- VCTR: Spannungsregelsignal;
- V_{R}: Regelspannung am Widerstand (R_{GPIO});
- VR: lokaler Regler einer jeweiligen integrierten Schaltung (IC1, IC2);
- VREG: Spannungsregler;
- Vₒᵤₜ: Spannungsreglerausgang;

### Liste der zitierten Schriften

DE 10 318 780 A1,
DE 10 2005 028 403 B4,
DE 10 2006 055 312 A1,
EP 1499 165 B1,
EP 2 600 695 B1,
US 7 157 866 B2,
US 8 319 449 B2,
US 8 519 632 B2,
US 2007/0 139 317 A1,
US 2008 / 0 122 383 A1,
US 2009 / 0 230 874 A1,
US 2010/0 026 209 A1,
US 2010/0 201 278 A1,
US 2011/0 012 521 A1,
US 2011/0 043 114 A1,
US 2012/0 268 012 A1,
WO 2013 / 030 047 A1.

## Patentansprüche

1. Verfahren zur Regelung einer Ausgangsspannung (V₀) an einem Ausgang (Vₒᵤₜ) eines stromgesteuerten Spannungsreglers (VREG) zur Versorgung einer Beleuchtungsvorrichtung umfassend mindestens zwei Schaltkreise (IC1, IC2),
wobei jeder dieser mindestens zwei Schaltkreise (IC1, IC2) mindestens eine LED-Gruppe (LED₁, LED₂, LED₃) jeweils mittels einer ihm zugehörigen und der jeweiligen LED-Gruppe zugeordneten Stromquelle in Form eines LED-Treibers (LED DRV) mit elektrischer Energie versorgt,
umfassend die Schritte
- Erzeugen der Ausgangsspannung (V₀) am Ausgang (Vₒᵤₜ) des Spannungsreglers (VREG) mittels des stromgesteuerten Spannungsreglers (VREG);
- Einstellen eines LED-Gruppen-Stromes (I_{LED1}, I_{LED2}) jeweils durch die mindestens eine LED-Gruppe (LED₁, LED₂) mittels der dieser LED-Gruppe (LED₁, LED₂) zugeordneten Stromquelle (LED DRV) eines ersten Schaltkreises (IC1);
- Einstellen eines LED-Gruppen-Stromes (I_{LED3}) jeweils durch die mindestens eine LED-Gruppe (LED₃) mittels der dieser LED-Gruppe (LED₃) zugeordneten Stromquelle (LED DRV) eines zweiten Schaltkreises (IC2);
- Einstellen eines LED-Gruppen-Stromes jeweils durch die mindestens eine LED-Gruppe mittels der dieser LED-Gruppe zugeordneten Stromquelle (LED DRV) eines weiteren Schaltkreises, wenn die Beleuchtungsvorrichtung mehr als zwei Schaltkreise umfasst;
- Erfassen, mittels eines Messmittels (ADC) in jedem Schaltkreis (IC1, IC2), eines jeweiligen Spannungsabfalls über die jeweiligen Stromquellen (LED DRV) der LED-Gruppen (LED₁, LED₂, LED₃) als jeweilige Spannungsabfallwerte, wobei in jedem Stromkreis (IC1, IC2) für jede Stromquelle (LED DRV) je ein Spannungsabfallwert ermittelt wird;
- Auswählen, mittels eines lokalen Reglers (VR) in jedem Schaltkreis (IC1, IC2), eines jeweiligen Spannungsabfallwerts aus den Spannungsabfallwerten der Stromquellen (LED DRV) des jeweiligen Schaltkreises (IC1, IC2) als kennzeichnenden Spannungsabfallwert dieses Schaltkreises (IC1, IC2);
- Entnehmen, mittels eines Treibers (DRV) in jedem Schaltkreis (IC1, IC2), eines jeweiligen Entnahmestromes des jeweiligen Schaltkreises (IC1, IC2) aus einem Regelbus (RB) durch jeden dieser Schaltkreise (IC1, IC2),
wobei der Betrag des jeweiligen Entnahmestromes des jeweiligen Schaltkreises (IC1, IC2) von der Abweichung des kennzeichnenden Spannungsabfallwerts des entsprechenden Schaltkreises (IC1, IC2) von einem Sollwert linear abhängt, und
wobei durch Einspeisung in den Regelbus (RB) alle Entnahmeströme und mindestens ein konstanter Bias-Strom (I_{Bias}) zu einem Summenstrom (I_{S}) summiert werden, und
- Regelung, mittels einer Rückkopplung, der Ausgangsspannung (V₀) des Spannungsreglers (VREG) an seinem Ausgang (Vₒᵤₜ) in Abhängigkeit von dem Summenstrom (Iₛ).

2. Vorrichtung zur Versorgung mehrerer LED-Gruppen (LED₁, LED₂, LED₃) mit elektrischer Energie, wobei die Vorrichtung umfasst
- einen stromgesteuerten Spannungsregler (VREG),
- mindestens zwei Schaltkreise (IC1, IC2),
- einen Regelbus (RB),
wobei jeder der Schaltkreise (IC1, IC2) zumindest einen LED-Anschluss (LED0, LED1) für eine korrespondierende Anzahl an LED-Gruppen (LED₁, LED₂, LED₃) aufweist, und
wobei jeder der Schaltkreise (IC1, IC2) zumindest jeweils einen LED-Treiber (LED DRV) je LED-Gruppe (LED₁, LED₂, LED₃) aufweist, wobei der LED-Treiber (LED DRV) dazu eingerichtet ist die jeweilige LED-Gruppe (LED₁, LED₂, LED₃) über den dieser LED-Gruppe (LED₁, LED₂, LED₃) zugehörigen LED-Anschluss (LED0, LED1) mit Energie zu versorgen, und
wobei jeder der Schaltkreise (IC1, IC2) jeweils zumindest ein Messmittel (ADC) aufweist, wobei das Messmittel (ADC) dazu eingerichtet ist Spannungsabfallwerte zwischen einem Potential des mindestens einen LED-Anschlusses (LED0, LED1) dieses Schaltkreises (IC1, IC2) und einem Bezugspotenzial (GND) zu erfassen, und
wobei jeder der Schaltkreise (IC1, IC2) einen Treiber (DRV) und einen lokalen Regler (VR) aufweist, wobei der lokale Regler (VR) dazu eingerichtet ist einen jeweiligen Spannungsabfallwert jedes Schaltkreises (IC1, IC2) aus den Spannungsabfallwerten dieses jeweiligen Schaltkreises (IC1, IC2) als kennzeichnenden Spannungsabfallwert dieses Schaltkreises (IC1, IC2) auszuwählen, und
wobei der lokale Regler (VR) weiter dazu eingerichtet ist mittels des Treibers (DRV) in linearer Abhängigkeit von den durch das Messmittel (ADC) des jeweiligen Schaltkreises (IC1, IC2) erfassten Spannungsabfallwerten einen jeweiligen Entnahmestrom aus dem Regelbus (RB) zu entnehmen, wobei der Betrag des jeweiligen Entnahmestromes des jeweiligen Schaltkreises (IC1,IC2) von der Abweichung des kennzeichnenden Spannungsabfallwerts des entsprechenden Schaltkreises (IC1,IC2) von einem Sollwert linear abhängt, und
wobei jeder der Schaltkreise (IC1, IC2) jeweils eine Bias-Stromquelle (IQ) aufweist, wobei die Bias-Stromquelle (IQ) dazu eingerichtet ist einen jeweiligen Bias-Strom (I_{Bias}) zur Bildung eines Summenstroms (Is) in den Regelbus (RB) einzuspeisen, wobei der Summenstrom (Is) der Summe aller jeweiligen Entnahmeströme und aller jeweiligen Bias-Ströme (I_{Bias}) der jeweiligen Schaltkreise (IC1, IC2) entspricht,
und
wobei die Vorrichtung per Rückkopplung derart eingerichtet ist, dass die Ausgangsspannung (V₀) des stromgesteuerten Spannungsreglers (VREG) von dem Wert des Summenstroms (Iₛ) abhängig ist.

3. Vorrichtung gemäß Anspruch 2, **dadurch gekennzeichnet,**
**dass** die Vorrichtung weiter umfasst
- einen Widerstand (R_{GPIO}),
wobei der Widerstand (R_{GPIO}) dazu eingerichtet ist eine Strom-Spannungswandlung des Summenstroms (Iₛ) in eine Regelspannung (V_{R}) durchzuführen, und
wobei die Ausgangsspannung (V₀) des stromgesteuerten Spannungsreglers (VREG) mittelbar über den Wert der Regelspannung (V_{R}) vom Wert des Summenstroms (Is) abhängig ist.

4. Vorrichtung gemäß Anspruch 3, **dadurch gekennzeichnet,**
**dass** die Vorrichtung weiter umfasst
- einen Spannung-zu-Strom-Wandler (VC-C), und
- ein Widerstandsnetzwerk (R1, R2),
wobei der Spannung-zu-Strom-Wandler (VC-C) dazu eingerichtet ist die Regelspannung (V_{R}) in einen Strom eines Spannungsregelsignals (VCTR) zu wandeln, und
wobei das Widerstandsnetzwerk (R1, R2) dazu eingerichtet ist den Strom des Spannungsregelsignals (VCTR) in einen Spannungswert (V_{ADJ}) zu wandeln, und
wobei die Ausgangsspannung (V₀) des stromgesteuerten Spannungsreglers (VREG) mittelbar über den Spannungswert (V_{ADJ}) vom Wert des Summenstroms (Is) abhängig ist.

## Claims

1. Method for regulating an output voltage (V₀) at an output (Vₒᵤₜ) of a current-controlled voltage regulator (VREG) for supplying a lighting device comprising at least two circuits (IC1, IC2), each of these at least two circuits (IC1, IC2) supplying at least one LED group (LED₁, LED₂, LED₃) with electrical energy in each case by means of a current source in the form of an LED driver (LED DRV) which is part of the at least two circuits (IC1, IC2) and is assigned to the respective LED group, comprising the steps of
- Generating the output voltage (V₀) at the output (Vₒᵤₜ) of the voltage regulator (VREG) by means of the current-controlled voltage regulator (VREG);
- Setting an LED group current (I_{LED1}, I_{LED2}) in each case by means of the at least one LED group (LED₁, LED₂) by means of the current source (LED DRV) assigned to this LED group (LED₁, LED₂) of a first circuit (IC1);
- Setting an LED group current (I_{LED3}) in each case by means of the at least one LED group (LED₃) by means of the current source (LED DRV) of a second circuit (IC2) assigned to this LED group (LEDs);
- Adjustment of an LED group current in each case by the at least one LED group by means of the current source (LED DRV) of a further circuit assigned to this LED group if the lighting device comprises more than two circuits;
- detecting, by means of a measuring means (ADC) in each circuit (IC1, IC2), a respective voltage drop across the respective current sources (LED DRV) of the LED groups (LED₁, LED₂, LED₃) as respective voltage drop values,
wherein in each circuit (IC1, IC2) for each current source (LED DRV) one voltage drop value is determined for each current source (LED DRV);
- selecting, by means of a local regulator (VR) in each circuit (IC1, IC2), a respective voltage drop value from the voltage drop values of the current sources (LED DRV) of the respective circuit (IC1, IC2) as a characteristic voltage drop value of this circuit (IC1, IC2);
- drawing, by means of a driver (DRV) in each circuit (IC1, IC2), a respective draw current of the respective circuit (IC1, IC2) from a control bus (RB) by means of each of these circuits (IC1, IC2),
wherein the amount of the respective draw current of the respective circuit (IC1, IC2) being dependent on the deviation of the characteristic voltage drop value of the corresponding circuit (IC1, IC2) from a setpoint value in a linear fashion, and wherein, by feeding into the control bus (RB), all withdrawal currents and at least one constant bias current (I_{Bias}) are summed to form a total current (I_{S}), and
- Regulation by means of feedback of the output voltage (V₀) of the voltage regulator (VREG) at its output (Vₒᵤₜ) as a function of the total current (I_{S}).

2. Device for supplying several LED groups (LED1, LED2, LED3) with electrical energy, wherein the device comprises
- a current-controlled voltage regulator (VREG),
- at least two circuits (IC1, IC2),
- a control bus (RB),
wherein each of the circuits (IC1, IC2) having at least one LED connection (LED0, LED1) for a corresponding number of LED groups (LED₁, LED₂, LED₃), and
wherein each of the circuits (IC1, IC2) having at least one LED driver (LED DRV) for each LED group (LED₁, LED₂, LED₃),
wherein the LED driver (LED DRV) is arranged to supply the respective LED group (LED₁, LED₂, LED₃) with energy via the LED connection (LED0, LED1) associated with this LED group (LED₁, LED₂, LED₃), and
wherein each of the circuits (IC1, IC2) has at least one measuring means (ADC), wherein the measuring means (ADC) is arranged to measure voltage drop values between a potential of the at least one LED connection (LED0, LED1) of this circuit (IC1, IC2) and a reference potential (GND)
wherein each of the circuits (IC1, IC2) comprises a driver (DRV) and a local regulator (VR),
wherein the local regulator (VR) is arranged to select a respective voltage drop value of each circuit (IC1, IC2) from the voltage drop values of that respective circuit (IC1, IC2) as the characteristic voltage drop value of that circuit (IC1, IC2), and
wherein the local regulator (VR) is further arranged to take a respective withdrawal current from the regulation bus (RB) by means of the driver (DRV) in linear dependence on the voltage drop values detected by the measuring means (ADC) of the respective circuit (IC1, IC2),
wherein the amount of the respective withdrawal current of the respective circuit (IC1, IC2) is linearly dependent on the deviation of the characteristic voltage drop value of the corresponding circuit (IC1, IC2) from a setpoint value, and
wherein each of the circuits (IC1, IC2) has a respective bias current source (IQ), wherein the bias current source (IQ) is arranged to feed a respective bias current (I_{Bias}) into the control bus (RB) to form a total current (I_{S}),
wherein the total current (I_{S}) corresponds to the sum of all respective withdrawal currents and all respective bias currents (I_{Bias}) of the respective circuits (IC1, IC2), and wherein the device is arranged via feedback in such a way that the output voltage (V₀) of the current-controlled voltage regulator (VREG) is dependent on the value of the total current (I_{S}).

3. Device according to claim 2, **characterized in**
**that** the device further comprises
- a resistor (R_{GPIO}),
wherein the resistor (R_{GPIO}) is arranged to perform a current-to-voltage conversion of the total current (I_{S}) into a regulating voltage (V_{R}), and
wherein the output voltage (V₀) of the current-controlled voltage regulator (VREG) is indirectly dependent on the value of the total current (I_{S}) via the value of the regulating voltage (V_{R}).

4. Device according to claim 3, **characterized in**
**that** the device further comprises
- a voltage-to-current converter (VC-C), and
- a resistor network (R1, R2),
wherein the voltage-to-current converter (VC-C) is arranged to convert the regulating voltage (V_{R}) into a current of a voltage control signal (VCTR), and
wherein the resistor network (R1, R2) is arranged to convert the current of the voltage control signal (VCTR) into a voltage value (V_{ADJ}), and
wherein the output voltage (V₀) of the current-controlled voltage regulator (VREG) is indirectly dependent on the value of the total current (I_{S}) via the voltage value (V_{ADJ}).

## Revendications

1. Procédé de régulation d'une tension de sortie (V₀) sur une sortie (Vₒᵤₜ) d'un régulateur de tension commandé en courant (VREG) pour l'alimentation d'un dispositif d'éclairage comprenant au moins deux circuits de commutation (IC1, IC2),
chacun de ces au moins deux circuits (IC1, IC2) alimentant en énergie électrique au moins un groupe de DEL (LED₁, LED₂, LED₃) respectivement au moyen d'une source de courant qui lui est associée et qui est associée au groupe de DEL respectif sous la forme d'un circuit d'attaque de DEL (LED DRV),
comprend les étapes
- Génération de la tension de sortie (V₀) à la sortie (Vₒᵤₜ) du régulateur de tension (VREG) au moyen du régulateur de tension commandé par le courant (VREG);
- le réglage d'un courant de groupe de DEL (I_{LED1}, I_{LED2}) respectivement par le au moins un groupe de DEL (LED₁, LED₂) au moyen de la source de courant (LED DRV) d'un premier circuit (IC1) associée à ce groupe de DEL (LED₁, LED₂);
- le réglage d'un courant de groupe de DEL (I_{LED3}) respectivement par le au moins un groupe de DEL (LED₃) au moyen de la source de courant (LED DRV) d'un deuxième circuit (IC2) associée à ce groupe de DEL (LED₃);
- le réglage d'un courant de groupe de DEL respectivement par le au moins un groupe de DEL au moyen de la source de courant (LED DRV) d'un autre circuit associée à ce groupe de DEL, si le dispositif d'éclairage comprend plus de deux circuits;
- détecter, au moyen d'un moyen de mesure (ADC) dans chaque circuit (IC1, IC2), une chute de tension respective à travers les sources de courant respectives (LED DRV) des groupes de DEL (LED₁, LED₂, LED₃) en tant que valeurs de chute de tension respectives,
une valeur de chute de tension étant déterminée dans chaque circuit électrique (IC1, IC2) pour chaque source de courant (LED DRV);
- sélectionner, au moyen d'un régulateur local (VR) dans chaque circuit (IC1, IC2), une valeur de chute de tension respective parmi les valeurs de chute de tension des sources de courant (LED DRV) du circuit respectif (IC1, IC2) comme valeur de chute de tension caractéristique de ce circuit (IC1, IC2);
- la quantité du courant de prélèvement respectif du circuit de commutation respectif (IC1, IC2) dépendant linéairement de l'écart de la valeur de chute de tension caractéristique du circuit de commutation correspondant (IC1, IC2) par rapport à une valeur de consigne, et
tous les courants de prélèvement et au moins un courant de polarisation constant (I_{Bias}) étant additionnés en un courant cumulé (I_{S}) par injection dans le bus de régulation (RB), et
- régulation, au moyen d'une rétroaction, de la tension de sortie (V₀) du régulateur de tension (VREG) à sa sortie (Vₒᵤₜ) en fonction du courant cumulé (I_{S}).

2. Dispositif d'alimentation en énergie électrique de plusieurs groupes de DEL (LED₁, LED₂, LED₃),
le dispositif comprenant
- un régulateur de tension commandé par le courant (VREG),
- au moins deux circuits de commutation (IC1, IC2),
- un bus de régulation (RB),
dans lequel chacun desdits circuits (IC1, IC2) comprend au moins une connexion de DEL (LED0, LED1) pour un nombre correspondant de groupes de DEL (LED₁, LED₂, LED₃), et chacun des circuits (IC1, IC2) comprenant au moins un pilote de DEL (LED DRV) par groupe de DEL (LED₁, LED₂, LED₃),
le pilote de DEL (LED DRV) étant conçu pour alimenter en énergie le groupe de DEL respectif (LED₁, LED₂, LED₃) via la connexion de DEL (LED0, LED1) associée à ce groupe de DEL (LED₁, LED₂, LED₃), et
chacun desdits circuits (IC1, IC2) comprenant respectivement au moins un moyen de mesure (ADC),
dans lequel le moyen de mesure (ADC) est agencé pour détecter des valeurs de chute de tension entre un potentiel de la au moins une connexion de DEL (LED0, LED1) de ce circuit (IC1, IC2) et un potentiel de référence (GND), et
dans lequel chacun desdits circuits (IC1, IC2) comprend un pilote (DRV) et un régulateur local (VR),
ledit régulateur local (VR) étant adapté pour sélectionner une valeur de chute de tension respective de chaque circuit (IC1, IC2) à partir des valeurs de chute de tension de ce circuit respectif (IC1, IC2) en tant que valeur de chute de tension caractéristique de ce circuit (IC1, IC2), et
le régulateur local (VR) étant en outre conçu pour prélever un courant de prélèvement respectif du bus de régulation (RB) au moyen du pilote (DRV) en fonction linéaire des valeurs de chute de tension détectées par le moyen de mesure (ADC) du circuit de commutation respectif (IC1, IC2),
la quantité du courant de prélèvement respectif du circuit de commutation respectif (IC1, IC2) dépendant linéairement de l'écart de la valeur de chute de tension caractéristique du circuit de commutation correspondant (IC1, IC2) par rapport à une valeur de consigne, et dans lequel chacun desdits circuits (IC1, IC2) comprend respectivement une source de courant de polarisation (IQ),
la source de courant de polarisation (IQ) étant agencée pour injecter un courant de polarisation respectif (I_{Bias}) dans le bus de régulation (RB) pour former un courant cumulé (I_{S}), le courant cumulé (I_{S}) correspondant à la somme de tous les courants de prélèvement respectifs et de tous les courants de polarisation respectifs (I_{Bias}) des circuits de commutation respectifs (IC1, IC2), et
dans lequel le dispositif est agencé par rétroaction de telle sorte que la tension de sortie (V₀) du régulateur de tension commandé par courant (VREG) dépend de la valeur du courant cumulé (I_{S}).

3. Dispositif selon la revendication 2, **caractérisé en ce que**
**en ce que** le dispositif comprend en outre
- une résistance (R_{GPIO}),
la résistance (R_{GPIO}) étant adaptée pour effectuer une conversion courant-tension du courant cumulé (I_{S}) en une tension de régulation (V_{R}), et
dans lequel la tension de sortie (V₀) du régulateur de tension commandé par courant (VREG) dépend indirectement de la valeur du courant cumulé (I_{S}) par l'intermédiaire de la valeur de la tension de régulation (V_{R}).

4. Dispositif selon la revendication 3, **caractérisé en ce que**
**en ce que** le dispositif comprend en outre
- un convertisseur de tension en courant (VC-C), et
- un réseau de résistances (R1, R2),
le convertisseur de tension en courant (VC-C) étant adapté pour convertir la tension de régulation (V_{R}) en un courant d'un signal de régulation de tension (VCTR), et
le réseau de résistances (R1, R2) étant adapté pour convertir le courant du signal de régulation de tension (VCTR) en une valeur de tension (V_{ADJ}), et
la tension de sortie (V₀) du régulateur de tension commandé par le courant (VREG) dépendant indirectement, par l'intermédiaire de la valeur de tension (V_{ADJ}), de la valeur du courant cumulé (I_{S}).
